# EUROPEAN PATENT SPECIFICATION

(11) **EP 3 626 511 B1**
(45) Date of publication and mention of the grant of the patent: **08.03.2023**
(21) Application number: 18195195.5
(22) Date of filing: 18.09.2018
(51) Int. Cl.: B60L 53/16, H01R 13/629, H01R 13/631, B60L 53/30

(54) **AUTOMATIC CONNECTION SYSTEM**
SYSTEM ZUR AUTOMATISCHEN VERBINDUNG
SYSTÈME DE CONNEXION AUTOMATIQUE

(43) Date of publication of application: 25.03.2020
(73) Proprietor: ABB E-mobility B.V., 2629 JG Delft (NL)
(72) Inventor: Raaijmakers, Stefan, 2613 WN Delft (NL)
(74) Representative: Maiwald GmbH

(56) References cited:
- FR-A1- 2 997 571
- US-A1- 2014 176 070
- US-A1- 2018 152 031

## Description

### Technical Field

The invention relates to an automatic connection system comprising an electrical vehicle and a charger for charging the electrical vehicle with electrical energy.

### Background Art

Electric vehicle, EV, direct current, DC, fast charging systems and methods often use a so-called Combined Charging System, CCS, protocol according to IEC 61851-23 and SAE J1772 standard for charging electrical vehicles both in the US and in the European Union, EU. As charge currents increase, liquid cooled charge cables for connecting an Electric Vehicle Supply Equipment, EVSE, via a charge connector with the electrical vehicle are becoming more commonly used. The liquid cooling allows conductors within the charge cable to become thinner, and thereby less stiff and easier to use, because excessive heat due to high charge currents and charge cable internal resistances is taken care of. On the other side liquid cooling increases weight of the charge cable and makes handling due to the additional weight difficult.

Even though, as charge currents are still going up, cables are becoming thicker. In turn weight of the cables and in particular of liquid cooled cables are increasing. Besides that connectors are venerable components that are easily damaged if dropped or handled incorrectly. Therefore, robotic systems have been developed for overcoming these disadvantages. However, such robotic systems are expensive and potentially dangerous for humans being too close to such robotic arms.
US2018/0152031 A1 describes an authomatic charging device for an AGV on an automated container terminal and a charging method using the same.
US2014/0176070 A1 describes a charging device for use with a plug-in vehicle having an energy storage device, comprising a charging electrical unit of the plug-in vehicle, the charging electrical unit having a socket with an insertion funnel.
FR2997571 A1 describes method for connecting male or female plug to a domestically recharge battery of an electric vehicle.

### Summary of invention

It is therefore an object of the invention to provide a robotic system for automatically connecting an electrical vehicle with a charger in a simple, cheap and secure manner.

The object of the invention is solved by the features of the appended set of claims. Preferred embodiments are detailed in the dependent claims.

Thus, the object is solved by an automatic connection system comprising an electrical vehicle and a charger for charging the electrical vehicle with electrical energy, whereby the charger or the electrical vehicle comprises a funnel extending in a plane and comprising a first connector arranged at the centre of the funnel, and the electrical vehicle or the charger, respectively, comprises an actuator with a second connector attached thereto, whereby the second connector is orthogonally displaceable in respect to the plane and the actuator is configured for moving the second connector in a linear direction for connecting with the first connector.

An embodiment relates to an automatic connection method for connection an electrical vehicle with a charger for charging the electrical vehicle with electrical energy, whereby the charger or the electrical vehicle comprises a funnel extending in a plane and comprising a first connector arranged at the centre of the funnel, and the electrical vehicle or the charger, respectively, comprises a second connector, whereby the second connector is orthogonally displaceable in respect to the plane, comprising the step of moving the second connector in a linear direction for connecting with the first connector.

It is therefore a key point of the invention to provide a system for in particular automatically connecting the electrical vehicle with the charger in a simple, cheap and secure manner. While prior art chargers often comprise heavy liquid cooled cables with connector attached characterized by the risk of easily damaged when dropped or handled incorrectly, the proposed system and method eliminates such problems and risks. Even further the proposed solution minimizes danger for humans as present with prior art systems. The actuator respectively the method allows by a simple linear movement, preferably in horizontal direction only, and in an easy manger establishing the electrical connection between charger and electrical vehicle. Thanks to the funnel sufficient guidance is provided for connecting the second connector to the first connector, as the funnel aligns the second connector when pushed respectively moved towards the first connector. As result a charging cable connecting the second connector can be heavy in weight, as the connection can be established in a fully automated way. As a further advantage expensive liquid cooling can be avoided, as the proposed solution provides a possibility for connecting the electrical vehicle to charge that is principally independent from the weight of the cable. Furthermore, as the actuator is preferably provided on the bottom of the electrical vehicle and thus away from any persons, the system respectively the method significantly reduces dangers compared to said prior art systems.

Preferably, the system are fully automated, for example by a computerized means and/or provided as a robotic system respectively method for automatically connecting the connectors. More preferably, the system and/or the method comprises a computerized control device for automatically moving the second connector in particular via the actuator. Preferably, the method is implemented as a computer implemented method for executing said step respectively steps. More preferably, the method comprises an actuator configured for moving the second connector. The actuator can additionally be configured for orthogonally displacing the second connector, for example by pivoting an actuator arm of the actuator to which the second connector is attached to. Thereby, the actuator arm can be firmly attached at its one end to the electrical vehicle or the charger, respectively, whereby the second connector is attached to its second, opposite end. The actuator arm may comprise a length of ≥ 0,5m, 1m or 2m. The actuator can be provided as a hydraulic, pneumatic, electric, as a supercoiled polymer actuator, as a thermal, magnetic and/or as a mechanical actuator.

The charger is preferably provided as an Electric Vehicle Supply Equipment, EVSE, for charging the electrical vehicle according to a called Combined Charging System, CCS, protocol according to IEC 61851-23 and SAE J1772. The Combined Charging System, CCS, protocol is a fast charging method for charging electric vehicles delivering high-voltage direct current via a charging connector derived from SAE J 1772 standard (IEC Type 1) or IEC Type 2 connector. Automobile manufactures that support CCS include Jaguar, Volkswagen, General Motors, BMW, Daimler, Ford, FCA, Tesla and Hyundai. The CSS standard is controlled by the so called CharIN consortium. Besides other protocols such as, for example, CHAdeMO, as abbreviation of CHArge de Move, or GBIT, in particular according to 20234.3-2011 standard, can be used in connection with the proposed system and/or method.

The charger may comprise a transformer and/or a converter for connecting to respectively receiving electrical energy from an AC grid, which is transformed and/or converted to DC for being supplied to the second connector via a charging cable. The charging cable is preferably arranged within or attached to the actuator thereby connecting the converter and the second connector. The charging cable may comprise liquid cooling. However, as the actuator allows connecting heavy charge cables in anautomated manner via the second connector to the first connector liquidcooling for the charging cable can be omitted. The electrical energy preferably comprises an AC voltage or a DC voltage for respective conductive and/or inductive small-gap charging. Consequently, the first connector and/or the second connector can be provided as an AC and/or as a DC connector, respectively.

Generally, the charger, also referred to as electric vehicle charging station, EV charging station, electric recharging point, charging point and charge point, is an element in an infrastructure that supplies electric energy for the recharging of electric vehicles, such as plug-in electric vehicles, including electric cars, neighbourhood electric vehicles and plug-in hybrids.
The charging cable preferably comprises DC conductors having a diameter of≥ 25 mm², 50 mm² or 70 mm² and/or a length of ≥ 4 m, 5 m or 7,5m and ≤ 5 m, 7,5 m or 10 m.The charging cable, the first connector and/or the second connector are preferably provided according to IEC 62196 standard. The charging cable, the first connector and/or the second connector may comprise further conductors, such as, for example, a Proximity Pilot, PP, line for a PP signal, a Control Pilot, CP, line for a CP signal line and/or a PE line for a PE signal. PP line, CP line and/or PE line and respectively signalling are preferably implemented according to the Combined Charging System, CCS, protocol, in particular according to IEC 61851 or IEC 61851-23 standard.

In a preferred implementation of the automatic connection system the charger comprises the funnel and the first connector, whereby both the funnel and the first connector are arranged on ground and the actuator is arranged on the bottom of the electrical vehicle. Preferably, the funnel and the first connector comprise a low thickness of for example not more than 2, 3 or 5 cm such that the funnel with the first connector can be placed on ground, for example on top of a parking surface. Alternatively, the funnel can be integrated with ground, for example provided in one piece with the parking surface. The actuator is preferably integrated with the electrical vehicle such that during normal operation of the electrical vehicle the actuator does not disrupt driving. Preferably, the actuator is arranged underneath a base plate of the electrical vehicle.

In a preferred implementation of the automatic connection system the actuator is configured for lifting the second connector and/or comprises a spring configured for lifting up the second connector. The second connector is preferably vertically displaceable in respect to the plane and/or in respect to the funnel. Thus, in case the funnel is provided on ground, the second connector is preferably lowerable in respect to the funnel, in particular by gravity, for subsequently connecting with the first connector and/or can be lifted up once charging is finished for storing in a storage shell.

In a preferred implementation of the automatic connection system or of the automatic connection method the electrical vehicle or the charger, respectively, comprises the storage shell configured for protecting the unconnected first connector against environmental influences. The storage shell is preferably provided as a casing, into which the second connector can be moved by the actuator, for protecting the actuator against water, dirt and the like. Preferably, the storage shell is completely enclosed having an opening, through which the first connector can be moved in and out of the storage shell.

The storage shell may comprise a sealing for sealing the second connector against said environmental influences. The second connector is preferably moveable between an extracted position, where the second connector is encased by the storage shell or connected to the first connector, and a retracted position, at which the second connector is not encased by the storage shell and not connected to the first connector but orthogonally displaceable in respect to the plane. The plane, if the funnel is arranged on ground, preferably extends parallel to the ground and/or in horizontal direction. It the funnel is attached to the electrical vehicle, the plane preferably extends parallel to the bottom of the electrical vehicle and/or in horizontal direction. The storage shell may comprise a sensor, which allows the electrical vehicle not to drive oft as long as the second connector is not stored in the storage shell. The storage shell may comprise a flap which can be swivelled by the second connector for closing the storage shell.

According to the invention the automatic connection system the charger or the electrical vehicle, respectively, comprises an additional funnel extending in the same plane and comprises an additional first connector arranged at the centre of the additional funnel and the additional funnel is arranged opposite to the funnel such that the second connector can be either connected to the first connector or to the additional first connector. Such way charging is independent from a driving direction of the electrical vehicle, as the electrical vehicle can connect to the charger from two opposite sides.

In a preferred implementation of the automatic connection method the method comprises the step of lifting up the second connector, and/or the method and/or the system comprises a spring configured for lifting up the second connector. Alternatively, a spring loaded mechanism can be provided for lowering and/or lifting up the second connector. Orthogonally displaceable means preferably that the second connector is lowered and/or lifted up while being in the same orientation, for example horizontally aligned in respect to the first connector.

In a preferred implementation of the automatic connection method the method comprises the step of moving the second connector in opposite linear direction out of the storage shell. If the second connector is moved out of the storage shell that is attached to the electrical vehicle, the second connector preferably falls to ground by gravity. Thereafter, the second connector can be pushed by said linear movement into the first connector such that charging of the electrical vehicle may start.

In a preferred implementation of the automatic connection method the method comprises the steps of moving the second connector in opposite linear direction for disconnecting the second connector from the first connector, displacing the second connector in orthogonal direction in respect to the plane, and/or moving the second connector in linear direction into the storage shell. Once charging has been finished, the second connector can be disconnected from the first connector by retracting the actuator. In case the second connector has fallen to ground before connecting with the first connector, the second connector is preferably pivoted up for subsequently storing in the storage shell so that the electrical vehicle can leave the charger by driving away.

In a preferred implementation of the automatic connection method the method comprises the step of locking the second connector in an orthogonally undisplaceable position in respect to the plane for moving the second connector into and/or out of the storage shell. The orthogonally undisplaceable position preferably comprises a vertical lock, for example by a latch.

In a preferred implementation of the automatic connection system or of the automatic connection method the funnel comprises, in linear direction towards the first connector, a placement area followed by a funnel area for aligning the second connector with the first connector. The placement area is preferably greater in horizontal direction than the funnel area thereby allowing for a big misalignment compensation when connecting the second connector with the first connector. The funnel area, in direction towards the first connector, preferably comprises a declining extension in horizontal direction and/or in direction of the plane for aligning the second connector. Thus, the funnel respectively the placement area and/or the funnel area advantageously compensate for any misalignment of the second connector in direction of the plane and/or in horizontal direction.

In a preferred implementation of the automatic connection system or of the automatic connection method the placement area and the tunnel area comprise ridges having a fish-bone structure for aligning the second connector with the first connector. Ridges having a fish-bone structure, which are preferably aligned towards the centre of the tunnel, advantageously provide guidance to the second connector when connecting to the first connector.

In a preferred implementation of the automatic connection system or of the automatic connection method the funnel only extends in horizontal direction as single plane, the second connector is vertically displaceable and the actuator is configured for linearly moving the second connector only in horizontal direction.

Further embodiments and advantages of the method are directly and unambiguously derived by the person skilled in the art from the system as described before.

### Brief description of drawings

These and other aspects of the invention will be apparent from and elucidated with reference to the embodiments described hereinafter.

In the drawings:
Fig. 1 shows an automatic connection system for executing an automatic connection method according to a first exemplary embodiment in a perspective-schematic view,
Fig. 2 shows an automatic connection system for executing an automatic connection method according to a second exemplary embodiment in a perspective-schematic view,
Fig. 3 shows a funnel of the automatic connection system according to the first and second exemplary embodiment in schematic top-view,
Fig. 4 shows the automatic connection system with the automatic connection method in various stages according to the first exemplary embodiment in a schematic side view, and
Fig. 5 shows the automatic connection system with the automatic connection method in various stages according to the second exemplary embodiment in a schematic side view.

### Description of embodiments

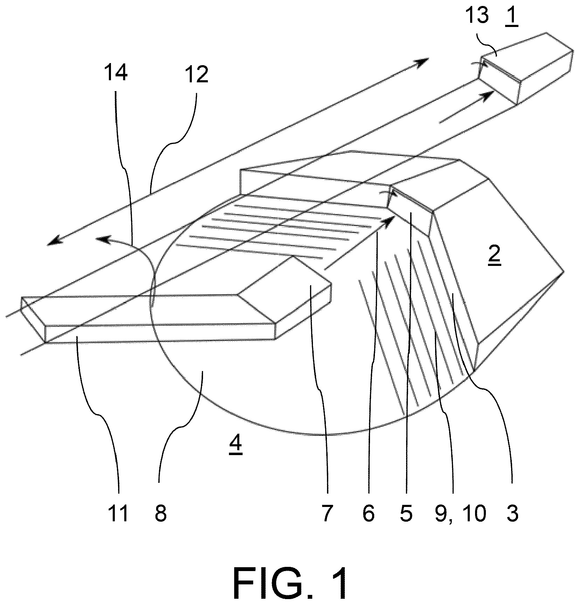

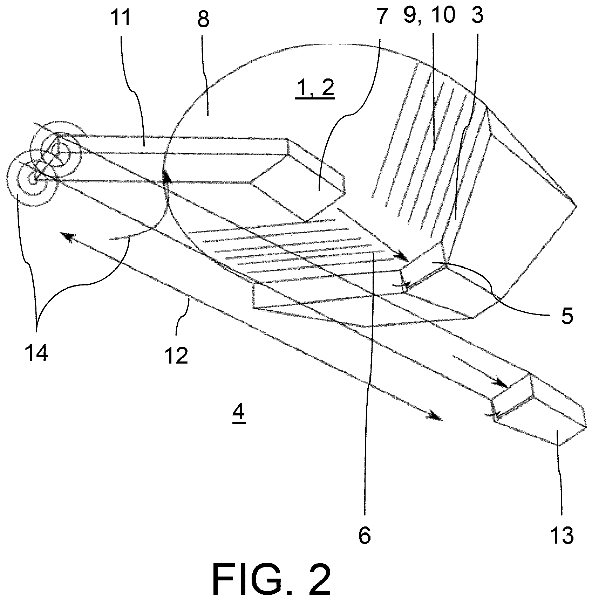

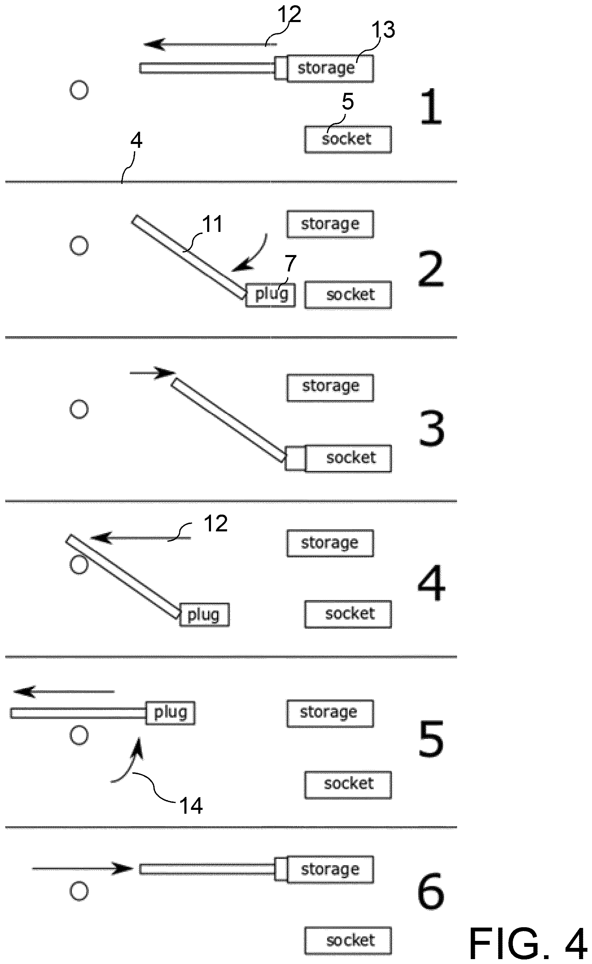

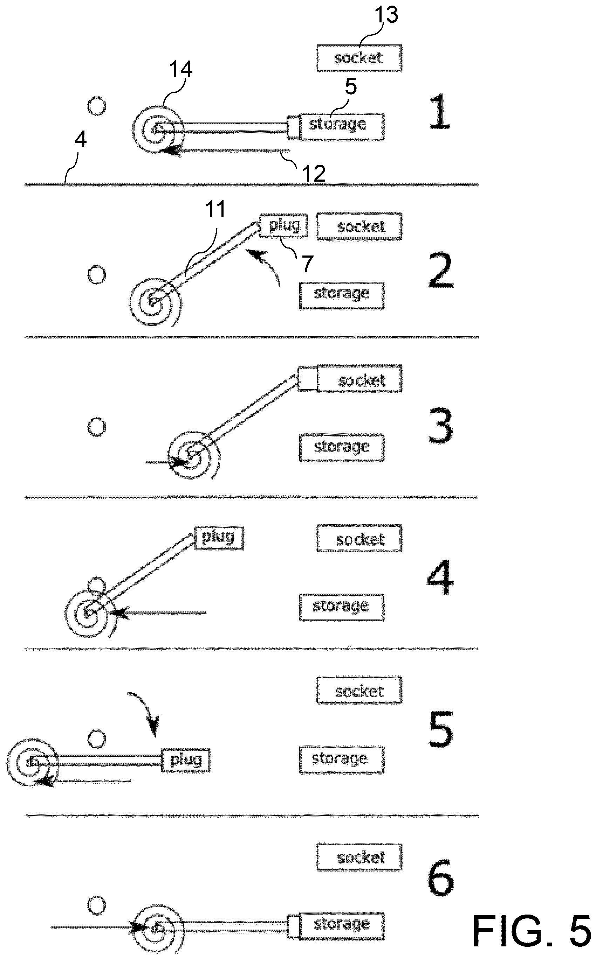

Fig. 1 shows an automatic connection system for executing an automatic connection method according to a first exemplary embodiment in a perspective-schematic view and Fig. 2 shows an automatic connection system for executing an automatic connection method according to a second exemplary embodiment in a perspective-schematic view. In this regard, Fig. 4 shows the automatic connection system with the automatic connection method in various stages according to the first exemplary embodiment in a schematic side view, and Fig. 5 shows the automatic connection system with the automatic connection method in various stages according to the second exemplary embodiment in a schematic side view.

The automatic connection system comprises an electrical vehicle 1, only schematically depicted in Figs. 1 and 2, and a charger 2 for charging the electrical vehicle 1 with electrical energy. The charger 2 is provided as an Electric Vehicle Supply Equipment, EVSE, and allows charging the electrical vehicle 1 via a Combined Charge System, CCS, protocol according to IEC 61851-23 and/or SAE J1772 standard. The charger 2 is connected via a not depicted converter and transformer to an AC grid.

The charger 2 comprises a funnel 3, which is arranged on ground 4. The funnel only extends in a single, horizontal plane and comprises at its centre a schematically depicted first connector 5. The first connector 5 is provided as socket for electrically connecting, indicated by arrow 6, with a second connector 7 provided as plug. The first connector 5 and the second connector 7 are each provided according to IEC 62196 standard.

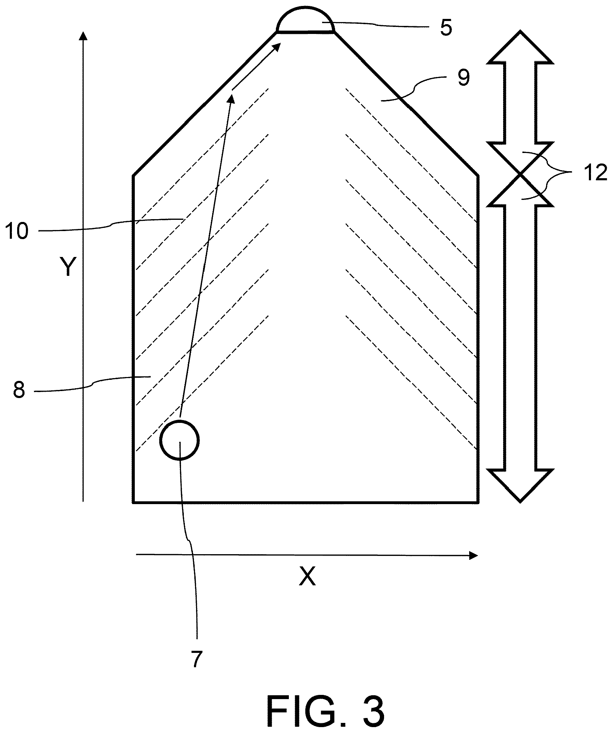

The funnel 3 comprises, in linear direction towards the funnel centre respectively towards the first connector 5, first a placement area 8 followed by a funnel area 9. The placement area 8 and the funnel area 9, also depicted in Fig. 3, are provided with ridges having a fish-bone structure 10. Such way, when placing the second connector 7 onto the placement area 8 as depicted in Fig. 1, by moving the second connector 7 only in linear direction towards the first connector 7 respectively the funnel 3, indicated by arrow 6, the second connector 7 is being centred by the funnel 3 within the funnel area 9 until the second connector 7 becomes electrically connected with the first connector 5. Thereby the ridges having the fish-bone structure 10 support said centring of the second connector 7, as indicated in Fig. 3 by the small arrows.

For moving the second connector 7 in linear direction the electrical vehicle 1 comprises an electromechanical actuator 11, at the tip of which the second connector 7 is firmly attached. The actuator 11 is attached from underneath to respectively integrated with a floor plate of the electrical vehicle 1. The actuator 11 allows for moving the second connector 7 in horizontal, linear direction only, as indicated by arrows 6 and 12, underneath the floor plate. Such way the actuator 11 is moveable between an extracted and retracted position. Besides that the second connector 7 is attached to the actuator 11 orthogonally displaceable in respect to the plane defined by the funnel 3 respectively by the funnel area 9. Such way the actuator 11 allows for electrically connecting the second connector 7 to the first connector 5 by a single, linear movement, as explained in the following.

For protecting the unconnected second connector 7 against environmental influences, the vehicle 1 comprises a storage shell 13, which is arranged in linear movement direction of the actuator 11 and provided underneath and attached to the floor plate of the electrical vehicle 1. In the extracted position of the actuator 11 the second connector 7 is fully encased by the storage shell 13.

Thus, by referring to Fig. 4 showing the automatic connection method in various stages, for charging the electrical vehicle 1 with electrical energy, the electrical vehicle 1 comprising the actuator 11 and the storage shell 13 stops at the charger 2 such that the storage shell 13 is placed vertically above the charger 2. In the first stage the second connector 7 is still arranged within the storage shell 13 thereby protected against undesired external influences such as water and dirt. As indicated by arrow 12, the actuator 11 moves the second connector 7 in a linear, horizontal movement from its extracted position away and out of the storage shell 13 in direction of its retracted position.

Once the second connector 7 left the storage shell 13, due to gravity the second connector 7 falls down towards ground 4, indicated by a curved arrow, to rest onto the placement area 8 respectively onto the funnel area 9, as depicted in stage 2. In stage 3, the actuator 11 moves the second connector 7 in direction of the first connector 5 towards its extracted position. Due to the funnel 3 the second connector 7 becomes horizontally aligned and subsequently connecting with the first connector 7 even that the second connector 7 is only moved in linear direction.

For disconnecting the second connector 7 from the first connector 5, shown in stage 4, the second connector 7 is retracted by the actuator 11 and thereby disconnected from the first connector, indicated by arrow 12. As the second connector 7 is still vertically displaced in respect to the storage shell 13, the second connector 7 is vertically lifted up by means of a spring or motorized drive 14 of the actuator 11, indicated in stage 5 by the curved arrow 14. Once the second connector 7 is vertically undisplaced in respect to the storage shell 13, the actuator 11 moves the second connector 7 with said linear, horizontal movement into of the storage shell 13, as can be seen in stage 6.

Fig. 2 shows the automatic connection system of Fig. 1 according to a second exemplary embodiment. Opposite to the first embodiment of Fig. 1, with the second embodiment of Fig. 2 the electrical vehicle 1 comprises the funnel 3 and the charger 2 comprises the actuator 11 and the storage shell 13 is arranged on ground 4. The funnel 3 is attached respectively integrated with the floor plate of the electrical vehicle 1. Specifically, the placement area 8 and the funnel area 9 are integrated flash with the floor plate such that the funnel 3 is open towards ground 4. Such way, once the electrical vehicle 1 has been positioned above the charger 2, the actuator 11 can be retracted, as depicted in stage 1 in Fig. 5, so that the second connector 7 moves out of the storage shell 13. Once the second connector 7 has been moved out of the storage shell 13, the spring 14 raises the second connector 7 up to the placement area 8, as can be seen in stage 2.

In stage 3, the actuator 11 extracts such that the second connector 7 connects to the first connector 5. Thereby, as explained before, the second connector 7 is centred by the funnel 3 while sliding on the funnel area 9 towards the first connector 5. Once the electrical vehicle 1 has been charged, for disconnecting the connectors 5, 7 from each other, in stage 4 the actuator 11 retracts with linear movement direction parallel to ground 4 and thereby moves the second connector 7 out of the first connector 5. In the following stage 5, the second connector 7 is orthogonally displaced in respect to the plane defined by the funnel 3 i.e. pivoted towards ground 4 until the actuator 11 and the second connector 7 extend in linear horizontal direction. In stage 6 the actuator 11 is extended for storing the second connector 7 within the storage shell 13.

According to the invention, the charger 2 or the electrical vehicle 1, respectively, comprises an additional funnel 3, which extends in the same plane as the funnel 3. The additional funnel 3 comprises an additional first connector 5, which is arranged at the centre of the additional funnel 3. As the additional funnel 3 is arranged opposite to the funnel 3, the second connector 7 can be either connected to the first connector 5 or to the additional first connector 5 such that the electrical vehicle can be charged either from one direction or from the opposite direction.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

1 electrical vehicle
2 charger
3 funnel, additional funnel
4 ground
5 first connector, additional first connector
6 arrow
7 second connector
8 placement area
9 funnel area
10 ridges having a fish-bone structure
11 actuator
12 arrow
13 storage shell
14 spring

## Claims

1. Automatic connection system comprising an electrical vehicle (1) and a charger (2) for charging the electrical vehicle (1) with electrical energy, whereby the charger (2) or the electrical vehicle (1) comprises a funnel (3) extending in a horizontal plane and comprising a first connector (5) arranged at the centre of the funnel (3), and
the electrical vehicle (1) or the charger (2), respectively, comprises an actuator (11) with a second connector (7) attached thereto, whereby the second connector (7) is orthogonally displaceable in respect to the plane and the actuator (11) is configured for moving the second connector (7) in a horizontal direction for connecting with the first connector (5),
**characterized in that** the charger (2) or the electrical vehicle (1), respectively, comprises an additional funnel (3) extending in the same plane and comprises an additional first connector (5) arranged at the centre of the additional funnel (3) and the additional funnel (3) is arranged opposite to the funnel (3) such that the second connector (7) can be either connected to the first connector (5) or to the additional first connector (5).

2. Automatic connection system according to the previous system claim, whereby the charger (2) comprises the funnel (3) and the first connector (5), which are both arranged on ground (4) and the actuator (11) is arranged on the bottom of the electrical vehicle (1).

3. Automatic connection system according to any of the previous system claims, whereby the actuator (11) is configured for lifting the second connector (7) and/or comprises a spring (14) configured for lifting up the second connector (7).

4. Automatic connection system according to any of the previous claims, whereby the electrical vehicle (1) or the charger (2), respectively, comprises a storage shell (13) configured for protecting the unconnected first connector (5) against environmental influences.

5. Automatic connection system according to any of the previous claims, whereby the funnel (3) comprises, in linear direction towards the first connector (5), a placement area (8) followed by a funnel area (9) for aligning the second connector (7) with the first connector (5).

6. Automatic connection system according to the previous claim, whereby the placement area (8) and/or the funnel area (9) comprise ridges having a fish-bone structure (10) for aligning the second connector (7) with the first connector (5).

7. Automatic connection system according to any of the previous claims, whereby the funnel (3) only extends in horizontal direction as single plane, the second connector (7) is vertically displaceable and the actuator (11) is configured for linearly moving the second connector (7) only in horizontal direction.

## Patentansprüche

1. System zur automatischen Verbindung, umfassend ein Elektrofahrzeug (1) und ein Ladegerät (2) zum Laden des Elektrofahrzeugs (1) mit elektrischer Energie, wobei das Ladegerät (2) oder das Elektrofahrzeug (1) einen Trichter (3) umfasst, der sich in einer horizontalen Ebene erstreckt und einen ersten Steckverbinder (5) umfasst, der in der Mitte des Trichters (3) angeordnet ist, und wobei das Elektrofahrzeug (1) bzw. das Ladegerät (2) einen Aktuator (11) mit einem daran befestigten zweiten Steckverbinder (7) umfasst, wobei der zweite Steckverbinder (7) bezüglich der Ebene orthogonal versetzbar ist und wobei der Aktuator (11) ausgelegt ist zum Bewegen des zweiten Steckverbinders (7) in einer horizontalen Richtung zum Verbinden mit dem ersten Steckverbinder (5),
**dadurch gekennzeichnet, dass** das Ladegerät (2) bzw. das Elektrofahrzeug (1) einen zusätzlichen Trichter (3) umfasst, der sich in der gleichen Ebene erstreckt, und einen zusätzlichen ersten Steckverbinder (5) umfasst, der in der Mitte des zusätzlichen Trichters (3) angeordnet ist, und wobei der zusätzliche Trichter (3) gegenüber dem Trichter (3) angeordnet ist, sodass der zweite Steckverbinder (7) entweder mit dem ersten Steckverbinder (5) oder mit dem zusätzlichen ersten Steckverbinder (5) verbunden werden kann.

2. System zur automatischen Verbindung nach dem vorhergehenden Systemanspruch, wobei das Ladegerät (2) den Trichter (3) und den ersten Steckverbinder (5) umfasst, die beide auf dem Boden (4) angeordnet sind und wobei der Aktuator (11) am Boden des Elektrofahrzeugs (1) angeordnet ist.

3. System zur automatischen Verbindung nach einem der vorhergehenden Systemansprüche, wobei der Aktuator (11) ausgelegt ist zum Anheben des zweiten Steckverbinders (7) und/oder eine Feder (14) umfasst, die ausgelegt ist zum Anheben des zweiten Steckverbinders (7).

4. System zur automatischen Verbindung nach einem der vorhergehenden Ansprüche, wobei das Elektrofahrzeug (1) bzw. das Ladegerät (2) eine Verstauungskappe (13) umfasst, die dazu ausgelegt ist, den nicht angeschlossenen ersten Steckverbinder (5) gegen Umwelteinflüsse zu schützen.

5. System zur automatischen Verbindung nach einem der vorhergehenden Ansprüche, wobei der Trichter (3), in linearer Richtung hin zum ersten Steckverbinder (5), einen Platzierungsbereich (8), gefolgt von einem Trichterbereich (9) zum Ausrichten des zweiten Steckverbinders (7) mit dem ersten Steckverbinder (5) umfasst.

6. System zur automatischen Verbindung nach dem vorhergehenden Anspruch, wobei der Platzierungsbereich (8) und/oder der Trichterbereich (9) Grate umfassen, die eine Fischgrätenstruktur (10) aufweisen, um den zweiten Steckverbinder (7) mit dem ersten Steckverbinder (5) auszurichten.

7. System zur automatischen Verbindung nach einem der vorhergehenden Ansprüche, wobei sich der Trichter (3) nur in horizontaler Richtung als eine einzelne Ebene erstreckt, wobei der zweite Steckverbinder (7) vertikal versetzbar ist und der Aktuator (11) ausgelegt ist zum linearen Bewegen des zweiten Steckverbinders (7) nur in horizontaler Richtung.

## Revendications

1. Système de connexion automatique comprenant un véhicule électrique (1) et un chargeur (2) destiné à charger le véhicule électrique (1) en énergie électrique, dans lequel le chargeur (2) ou le véhicule électrique (1) comprend un entonnoir (3) s'étendant dans un plan horizontal et comprenant un premier connecteur (5) agencé au centre de l'entonnoir (3), et
le véhicule électrique (1) ou le chargeur (2), respectivement, comprend un actionneur (11) muni d'un second connecteur (7) fixé à celui-ci, dans lequel le second connecteur (7) peut être déplacé orthogonalement par rapport au plan et l'actionneur (11) est configuré pour déplacer le second connecteur (7) dans une direction horizontale pour se connecter au premier connecteur (5),
**caractérisé en ce que** le chargeur (2) ou le véhicule électrique (1), respectivement, comprend un entonnoir (3) supplémentaire s'étendant dans le même plan et comprend un premier connecteur (5) supplémentaire agencé au centre de l'entonnoir (3) supplémentaire et l'entonnoir (3) supplémentaire est agencé à l'opposé de l'entonnoir (3) de telle sorte que le second connecteur (7) peut être connecté soit au premier connecteur (5), soit au premier connecteur (5) supplémentaire.

2. Système de connexion automatique selon la revendication de système précédente, dans lequel le chargeur (2) comprend l'entonnoir (3) et le premier connecteur (5), qui sont tous les deux agencés au sol (4) et l'actionneur (11) est agencé sur le dessous du véhicule électrique (1).

3. Système de connexion automatique selon l'une quelconque des revendications de système précédentes, dans lequel l'actionneur (11) est configuré pour lever le second connecteur (7) et/ou comprend un ressort (14) configuré pour lever le second connecteur (7).

4. Système de connexion automatique selon l'une quelconque des revendications précédentes, dans lequel le véhicule électrique (1) ou le chargeur (2), respectivement, comprend une coque de stockage (13) configurée pour protéger le premier connecteur (5) non connecté contre des influences environnementales.

5. Système de connexion automatique selon l'une quelconque des revendications précédentes, dans lequel l'entonnoir (3) comprend, dans une direction linéaire vers le premier connecteur (5), une zone de placement (8) suivie d'une zone d'entonnoir (9) pour aligner le second connecteur (7) avec le premier connecteur (5).

6. Système de connexion automatique selon la revendication précédente, dans lequel la zone de placement (8) et/ou la zone d'entonnoir (9) comprennent des arêtes ayant une structure en arêtes de poisson (10) pour aligner le second connecteur (7) avec le premier connecteur (5).

7. Système de connexion automatique selon l'une quelconque des revendications précédentes, dans lequel l'entonnoir (3) s'étend uniquement dans une direction horizontale comme plan unique, le second connecteur (7) peut être déplacé verticalement et l'actionneur (11) est configuré pour déplacer linéairement le second connecteur (7) dans une direction horizontale uniquement.
